# EUROPÄISCHE PATENTANMELDUNG

(11) **EP 1 865 266 A1**
(43) Veröffentlichungstag der Anmeldung: **12.12.2007**
(21) Anmeldenummer: 06024683.2
(22) Anmeldetag: 29.11.2006
(51) Int. Cl.: F24D 3/08, F28D 20/00

(54) **Wärmeüberträger, insbesondere zur Erwärmung von Frischwasser**

(30) Priorität: 06.06.2006 DE 202006009009 U
(71) Anmelder: Dietz, Erwin, 75305 Neuenbürg (DE)
(72) Erfinder: Dietz, Erwin, 75305 Neuenbürg (DE)
(74) Vertreter: Schmidt, Sven Hendrik

(57) **Zusammenfassung**

Die Erfindung betrifft einen Wärmeüberträger zur Erwärmung einer Nutzflüssigkeit, insbesondere von Frischwasser
- mit einem Einlass zum Einleiten der Nutzflüssigkeit in den Wärmeüberträger;
- mit einem Auslass zum Ableiten der Nutzflüssigkeit aus dem Wärmeüberträger;
- mit einem Wärmeträgermediumeinlass zum Einleiten eines erhitzten Wärmeträgermediums in den Wärmeüberträger;
- mit einem Wärmeträgermediumauslass zum Ableiten des Wärmeträgermediums aus dem Wärmeüberträger;
- mit einer Wärmeaustauschfläche, entlang von welcher die Nutzflüssigkeit und das Wärmeträgermedium geführt sind, um Wärme vom Wärmeträgermedium auf die Nutzflüssigkeit zu übertragen.

Die Erfindung ist gekennzeichnet durch die folgenden Merkmale:
- der Wärmeüberträger weist einen Boiler zur Aufnahme eines Volumens von Nutzflüssigkeit auf, in welchem der Einlass und der Auslass für die Nutzflüssigkeit münden; und
- durch welchen eine das Wärmeträgermedium führende Rohrleitung geführt ist;
- im Boiler ist ein Kamin ausgebildet, welcher die Rohrleitung in Umfangsrichtung umschließt und dadurch ein inneres Volumen des Boilers von einem äußeren Volumen des Boilers bei Belassen einer Eintrittfläche für Nutzflüssigkeit von dem äußeren Volumen zu dem inneren Volumen in einem unteren Bereich des Kamins und einer Austrittsfläche für Nutzflüssigkeit von dem inneren Volumen zu dem äußeren Volumen in einem oberen Bereich des Kamins abtrennt.

## Beschreibung

Die Erfindung betrifft einen Wärmeüberträger zur Erwärmung einer Nutzflüssigkeit, insbesondere zur Erwärmung von Frischwasser, wie es beispielsweise im häuslichen Bereich zum Duschen und dergleichen gebraucht wird.

Wärmeüberträger zur Erwärmung von Frischwasser im häuslichen Bereich sind bekannt. Beispielsweise beschreiben die beiden Gebrauchsmusterschriften DE 20 2004 016 209 U1 und DE 20 2004 017 724 U1 jeweils einen Wärmeüberträger (auch Wärmetauscher genannt), bei welchem das Frischwasser mittels eines Kältemitteldampfes, der im Gegenstrom zum Frischwasser strömt, erwärmt wird.

Die bekannten Wärmeüberträger weisen den Nachteil auf, dass eine Erwärmung des Frischwassers nur auf etwa 50 bis 55 Grad Celsius möglich ist, was zur Vernichtung gesundheitsgefährdender Stoffe, die sich im Wärmetauscher konzentrieren können oder durch das Frischwasser mitgeführt werden, nicht ausreichend ist. Das Erreichen höherer Frischwassertemperaturen bei bekannten Wärmetauschern ist nur unter Zuhilfenahme einer direkten Widerstandsheizung möglich, was eine erhebliche Beeinträchtigung des Gesamtwirkungsgrades bedingt.

Der Erfindung liegt die Aufgabe zugrunde, einen Wärmeüberträger anzugeben, welcher - insbesondere ohne Zuhilfenahme elektrischer Widerstandsheizungen oder von Brennern - eine Vernichtung gesundheitsgefährdender Stoffe in einer Nutzflüssigkeit, insbesondere in Frischwasser für den häuslichen Bereich, sicherstellt. Der Wärmeüberträger soll vorteilhaft eine höchst wirtschaftliche Betriebsweise, beispielsweise in Zusammenarbeit mit einer Wärmepumpe, zulassen, und die Nutzflüssigkeit beziehungsweise das Frischwasser vorteilhaft auf 60 Grad Celsius oder mehr erwärmen.

Die erfindungsgemäße Aufgabe wird durch einen Wärmeüberträger mit den Merkmalen von Anspruch 1 gelöst. Die abhängigen Ansprüche beschreiben vorteilhafte und besonders zweckmäßige Ausgestaltungen der Erfindung.

Der Wärmeüberträger weist neben den üblichen Anschlüssen zum Einleiten der Nutzflüssigkeit in den Wärmeüberträger und zum Ableiten der Nutzflüssigkeit aus dem Wärmeüberträger sowie zum Einleiten eines Wärmeträgermediums in den Wärmeüberträger und zum Ableiten des Wärmeüberträgermediums aus dem Wärmeüberträger einen Boiler auf, welcher ein vorbestimmtes Volumen der Nutzflüssigkeit, insbesondere Frischwasser, aufnimmt. Der Boiler ist eine Art Behälter, welcher ermöglicht, dass die Nutzflüssigkeit für eine bestimmte Verweildauer innerhalb des Wärmeüberträgers verweilt. In dem Boiler ist eine Wärmeaustauschfläche vorgesehen, entlang von welcher die Nutzflüssigkeit und das Wärmeträgermedium geführt sind, um Wärme vom Wärmeträgermedium auf die Nutzflüssigkeit zu übertragen.

Um die Wärmeaustauschfläche herzustellen, ist durch den Boiler eine Rohrleitung geführt, durch welche das Wärmeträgermedium geleitet wird. Ferner weist der Boiler einen Einlass und einen Auslass für die Nutzflüssigkeit, beispielsweise das Frischwasser, auf.

In dem Boiler ist ferner ein Kamin ausgebildet, welcher die das Wärmeträgermedium führende Rohrleitung in Umfangsrichtung umschließt und dadurch ein inneres Volumen des Boilers von einem äußeren Volumen des Boilers abtrennt. Die Abtrennung ist eine solche, dass der Kamin eine Kaminwirkung auf die Nutzflüssigkeit innerhalb von diesem ausüben kann. Hierzu ist der Kamin, der auch als Thermoschleuse bezeichnet werden kann, in der Regel im wesentlichen oder vollständig senkrecht ausgerichtet, so dass die in dem inneren Volumen des Boilers durch das durch die Rohrleitung strömende Wärmeträgermedium erhitzte Nutzflüssigkeit nach oben in dem Kamin aufsteigt, und hierdurch insbesondere eine Kreislaufströmung in dem Boiler ausgebildet wird, und zwar in einem ersten Zweig innerhalb des Kamins (im inneren Volumen) nach oben und in einem sich anschließenden zweiten Zweig außerhalb des Kamins (im äußeren Volumen) zurück nach unten im Boiler.

Um diese Aufwärtsströmung beziehungsweise Kreislaufströmung der Nutzflüssigkeit, insbesondere des Frischwassers, zu ermöglichen, ist die Abtrennung des inneren Volumens des Boilers von dem äußeren Volumen des Boilers durch den Kamin keine vollständige, sondern wenigstens eine Eintrittsfläche für Nutzflüssigkeit vom äußeren Volumen zum inneren Volumen in einem unteren Bereich des Kamins und eine Austrittsfläche für Nutzflüssigkeit vom inneren Volumen zum äußeren Volumen in einem oberen Bereich des Kamins wird belassen. Ferner ist es möglich, dass der Kamin weitere Öffnungen zwischen dem inneren Volumen und dem äußeren Volumen freilässt, solange der Kamineffekt zustande kommen kann. Vorteilhaft trennt der Kamin jedoch das innere Volumen und das äußere Volumen bis auf eine Eintrittsfläche am unteren Ende und eine Austrittsfläche am oberen Ende des Kamins vollständig voneinander ab.

Um den Kamineffekt zu verstärken, kann sich der Kamin beispielsweise von unten nach oben verjüngen.

Der Einlass für die Nutzflüssigkeit, beispielsweise in Form einer im Boiler mündenden Rohrleitung, ist vorteilhaft derart angeordnet, dass er in einem unteren Bereich des Kamins, insbesondere in der Nähe oder an der Eintrittsfläche, durch welche die Nutzflüssigkeit vom äußeren Volumen in das innere Volumen strömt, mündet. Der Auslass für die Nutzflüssigkeit, welcher ebenfalls in Form einer im Boiler mündenden Rohrleitung vorgesehen sein kann, mündet insbesondere in einem oberen Bereich des Boilers, vorteilhaft von oben in einer oberen Stirnseite des Boilers.

Die Rohrleitung, durch welche das Wärmeträgermedium strömt, welches zur Erwärmung der Nutzflüssigkeit, insbesondere des Frischwassers, dient, erstreckt sich vorteilhaft von oben nach unten durch den Boiler, wobei das Wärmeträgermedium insbesondere von oben nach unten und somit im Gegenstrom zu der Strömung der Nutzflüssigkeit im inneren Volumen strömt. Beispielsweise weist die Rohrleitung einen ersten senkrechten, geradlinigen Abschnitt auf, an welchen sich unterhalb desselben ein wendelförmiger Abschnitt anschließt. Der wendelförmige Abschnitt weist insbesondere einen zunehmenden Durchmesser der Wendeln, in Richtung von oben nach unten gesehen, auf. Der Kamin kann eine solche Rohrleitung mit einem im wesentlichen konstanten Abstand, bezogen auf die Breitenrichtung des Boilers, umschließen, so dass der Kamin von einem oberen zylinderförmigen Bereich um den ersten Abschnitt der Rohrleitung herum in einen unteren konusförmigen Bereich um die Rohrwendeln der Rohrleitung herum übergeht. Eine solche Ausführung wird später noch mit Bezug auf die Figur beschrieben.

Das Wärmeträgermedium ist beispielsweise ein Kältemitteldampf, der insbesondere in einem überhitzten Zustand in die Rohrleitung im Boiler eingeleitet wird. Die Rohrleitung stellt somit einen Enthitzer für den Kältemitteldampf dar. An die Rohrleitung kann sich ein Kondensator anschließen, der insbesondere unterhalb der Rohrleitung, in der Regel außerhalb des Boilers, angeordnet ist. Der Kondensator kann wiederum in Form einer wendelförmigen Rohrleitung beziehungsweise eines wendelförmigen Rohrleitungsabschnittes oder auch in einer anderen Form ausgeführt sein.

Um eine gezielte Schichtung von Nutzflüssigkeit hinsichtlich deren Temperaturniveau im Boiler einzustellen, kann die Eintrittsfläche und/oder die Austrittsfläche, durch welche die Nutzflüssigkeit aus dem äußeren Volumen in das innere Volumen beziehungsweise aus dem inneren Volumen in das äußere Volumen im Boiler strömt, höhenverstellbar ausgeführt sein, insbesondere durch eine Höhenverstellbarkeit des gesamten Kamins oder von einzelnen aneinander angeschlossenen relativ zueinander verschiebbaren Kaminabschnitten. Alternativ ist es auch möglich, eine oder mehrere Öffnungen, welche die Eintrittsfläche und/oder die Austrittsfläche ausbilden, wahlweise verschließbar auszuführen. Beispielsweise können eine Vielzahl von Öffnungen im Kamin vorgesehen sein, von denen einige gezielt geöffnet werden, um die Eintrittsfläche auszubilden, und andere geschlossen werden, welche in einer anderen Einstellung ebenfalls die Eintrittsfläche ausbilden könnten. Entsprechende verschließbare Öffnungen können auch zum Ausbilden der Austrittsfläche auf einem wahlweise einstellbaren Höhenniveau vorgesehen sein.

Bei einem höhenverstellbaren Kamin kann dieser beispielsweise einen ersten feststehenden Teil und einen zweiten höhenverstellbaren Teil umfassen. Der höhenverstellbare Teil kann entlang von dem feststehenden Teil, insbesondere an dessen inneren Umfang oder dessen äußeren Umfang, gleiten und so die Länge des Kamins teleskopartig variieren.

Die Positionierung des Kamins, bei einem insgesamt höhenverstellbaren Kamin, oder des höhenverstellbaren Teils oder der höhenverstellbaren Teile eines abschnittsweise höhenverstellbaren Kamins kann vorteilhaft in Abhängigkeit der Temperatur der Nutzflüssigkeit in dem Boiler, insbesondere in Abhängigkeit der Dichte der Nutzflüssigkeit in dem Boiler, erfolgen. Wenn die Nutzflüssigkeit eine geringere Dichte aufweist, weil sie wärmer ist, sinkt der Kamin beziehungsweise dessen höhenverstellbarer Teil im Boiler nach unten. Wenn die Dichte der Nutzflüssigkeit steigt, weil die Temperatur der Nutzflüssigkeit abnimmt, steigt der Kamin beziehungsweise dessen höhenverstellbarer Teil nach oben. Hierdurch kann die Menge der durch den Kamin zirkulierenden Nutzflüssigkeit reguliert werden.

Die Erfindung soll nachfolgend anhand von Ausführungsbeispielen und den beigefügten Figuren exemplarisch erläutert werden.

Es zeigen:
- Figur 1: eine erste Ausführungsform eines Wärmeüberträgers mit konisch verjüngtem Kamin;
- Figur 2: eine zweite Ausführungsform mit einem zylinderförmigen Kamin, der zudem in der gezeigten Ausführungsform teilweise höhenverstellbar ist.

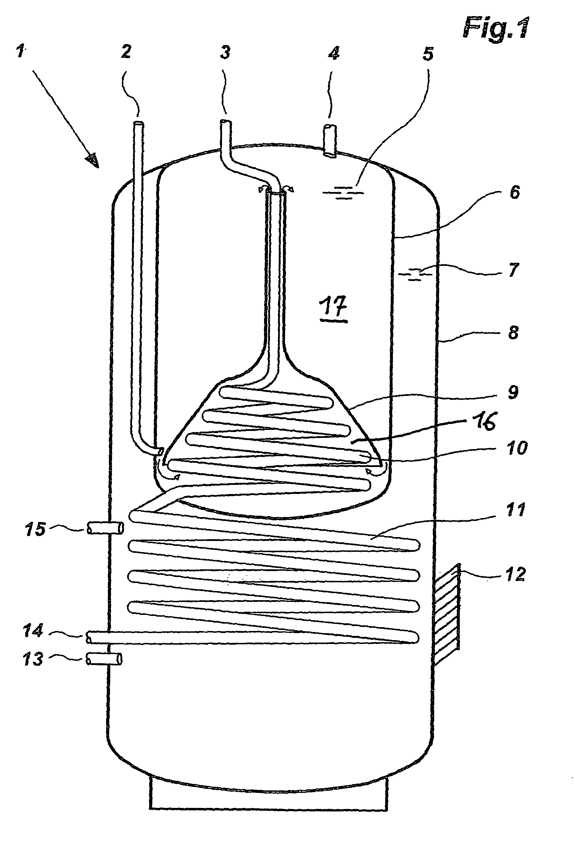

In der Figur 1 erkennt man einen Wärmeüberträger 1 mit einem Einlass 2 zum Einleiten von Frischwasser in den Wärmeüberträger 1 und mit einem Auslass 4 zum Ableiten von Frischwasser aus dem Wärmeüberträger 1. Der Auslass 4 mündet senkrecht von oben in dem von dem Boiler 6 umschlossenen Volumen, welches Frischwasser 5 in Form eines Vorrates aufnimmt.

Der Einlass 2 mündet bei dem gezeigten Ausführungsbeispiel im wesentlichen waagerecht von außen im Boiler 6. Vorliegend ist hierfür eine Rohrleitung vorgesehen, die zunächst senkrecht durch einen Außenboiler 8, der im nachfolgenden noch beschrieben wird, geführt ist und mit einem im wesentlichen waagerechten Endabschnitt durch die Wandung des Boilers 6 (der auch als Innenboiler bezeichnet werden kann) waagerecht im Innenboiler 6 mündet. Selbstverständlich sind auch andere Ausführungsformen denkbar. So kann die Leitung für den Einlass 2 beispielsweise in Form eines senkrechten, unmittelbar im Innenboiler 6 angeordneten Rohres ausgeführt sein, welches in etwa oder genau an derselben Stelle im Boiler 6 münden kann, wie das gezeigte Rohr des Einlasses 2.

Im Boiler 6 ist ein Kamin 9 vorgesehen, welcher ein inneres Volumen 16 von einem äußeren Volumen 17 abtrennt. Durch das innere Volumen 16 ist eine Rohrleitung 10 geführt, die von dem Kamin 9 in Umfangsrichtung umschlossen wird. Die Rohrleitung 10 weist einen ersten senkrechten Abschnitt auf, der von einem zylinderförmigen Abschnitt des Kamins 9 umschlossen wird. Unten an diesen ersten Abschnitt schließt sich ein zweiter Abschnitt der Rohrleitung 10 an, der von einem trichterförmigen zweiten Abschnitt des Kamins 9, welcher sich wiederum unten an den ersten zylinderförmigen Abschnitt des Kamins 9 anschließt, umschlossen wird. Der zweite untere Abschnitt der Rohrleitung 10 weist die Form einer Rohrwendel auf, wobei sich die einzelnen Wendeln von oben nach unten in ihrem Durchmesser zunehmend erweitern.

Durch die Rohrleitung 10 strömt von einem Wärmeträgermediumeinlass 3 ein Wärmeträgermedium von oben nach unten durch den Boiler 6 und tritt im unteren Bereich, geführt in der Rohrleitung 10, aus dem Boiler 6 aus, und zwar unmittelbar in den vom Außenboiler 8 umschlossenen Raum. In diesen Raum ist ein zweites Wärmeträgermedium 7, beispielsweise lediglich Wasser, eingebracht. Dieses Wasser dient dazu, das aus der Rohrleitung 10 in eine weitere Rohrwendel innerhalb des vom Außenboiler 8 umschlossenen Raumes einströmende (erste) Wärmeträgermedium weiter abzukühlen. Wenn das erste Wärmeträgermedium ein Kältemitteldampf ist, der überhitzt in den Wärmetauscher 1 eingeleitet wird, so stellt die Rohrleitung 10 im Boiler 6 einen Enthitzer und die sich anschließende Rohrwendel im Außenboiler 8 einen Kondensator 11 für den Kältemitteldampf dar. Aus dem Kondensator 11 strömt der dann flüssige Kältemitteldampf (allgemein das erste Wärmeträgermedium) zu einem Wärmeträgermediumauslass 14 und durch diesen aus dem Wärmeüberträger 1 hinaus.

Um Wärmeverluste zu minimieren, ist der Außenboiler 8 im Bereich seiner Wandung, insbesondere auf seiner Außenseite, mit einer Wärmeisolierung 12 versehen. Das zweite Wärmeträgermedium 7 ist somit thermisch gegenüber der Umgebung isoliert.

In dem gezeigten Ausführungsbeispiel weist der Außenboiler 8 ferner einen Außenboilereinlass 13 auf, um das zweite Wärmeträgermedium 7 in den Außenboiler 8 einzuleiten, und einen Außenboilerauslass 15, um das zweite Wärmeträgermedium 7 aus dem Außenboiler 8 abzuleiten. Somit kann das zweite Wärmeträgermedium 7 beispielsweise außerhalb des Wärmeüberträgers 1 abgekühlt werden, um im abgekühlten Zustand die notwendige Kondensationswärme im Kondensator 11 aufzunehmen.

Wie durch die Pfeile in der Figur 1 angedeutet ist, bewirkt das Vorsehen des Kamins 9 eine sich allein aufgrund freier Konvektion beziehungsweise thermischer Dichtenänderung einstellende Umwälzung des Frischwassers 5 im Boiler 6. Da somit ein und derselbe Teil des Frischwassers 5 mehrfach über die Rohrleitung 10, hier mit dem überhitzten Kältemitteldampf, geleitet wird, wenn er in einer Kreislaufströmung im Boiler 6 umläuft, kann das Frischwasser 5 zumindest kurzzeitig auf eine Temperatur von 60 Grad Celsius oder mehr erhitzt werden, so dass gesundheitsgefährdende Stoffe, beispielsweise Legionellen, thermisch vernichtet werden. Dabei ist es ausreichend, dass das Frischwasser 5 im inneren Volumen 16 des Boilers 6 die hohe zur Vernichtung der Legionellen erforderliche Temperatur erreicht, wenn es an der Oberfläche der Rohrleitung 10 entlangströmt. Eine dauerhafte Aufheizung des Frischwassers 5 im Boiler 6 auf 60 Grad Celsius oder mehr ist nicht erforderlich, kann jedoch gemäß einer Ausführungsform durch einen entsprechend wiederholten Umlauf zwischen dem inneren Volumen 16 und dem äußeren Volumen 17 vorgesehen sein. In der Regel wird das Frischwasser jedoch ein Temperaturniveau von cirka 45 Grad Celsius aufweisen, wenn es in den Boiler 6 eintritt beziehungsweise in diesem verweilt (abgesehen von dem gerade durch den Kamin 9 aufsteigenden Teil). Besonders vorteilhaft wird die Nutzflüssigkeit beziehungsweise das Frischwasser 5 im Boiler 6 auf eine Temperatur oberhalb der Kondensationstemperatur des Wärmeträgermediums und somit des zweiten Wärmeträgermediums 7 im Außenboiler 8 erwärmt beziehungsweise auf dieser Temperatur gehalten, bevor es den Boiler 6 über den Auslass 4 verlässt.

Der über den Wärmeüberträgereinlass 3 in die Rohrleitung 10 eintretende überhitzte Kältemitteldampf, der gewöhnlich auf einem Temperaturniveau zwischen cirka 75 Grad und 95 Grad Celsius liegt, erhitzt somit stets eine Teilmenge des Frischwassers 5, welche über die thermisch bedingte Änderung der Dichte im Kamin 9 nach oben aufsteigt, wodurch eine zwangsläufige, sich im Umlauf wiederholende Berührung des Frischwassers 5 mit der Oberfläche der Rohrleitung 10 stattfindet. Anschließend kann der in der Rohrleitung 10 (dem Enthitzer) enthitzte Kältemitteldampf im nachgeschalteten Kondensator 11 zur Verflüssigung gebracht werden.

Auch wenn dies nicht dargestellt ist, können in dem Außenboiler 8 weitere Wärmetauscher mit entsprechenden Einlässen und Auslässen vorgesehen sein, um Wärme in das zweite Wärmeträgermedium 7 einzuleiten oder aus diesem abzuführen.

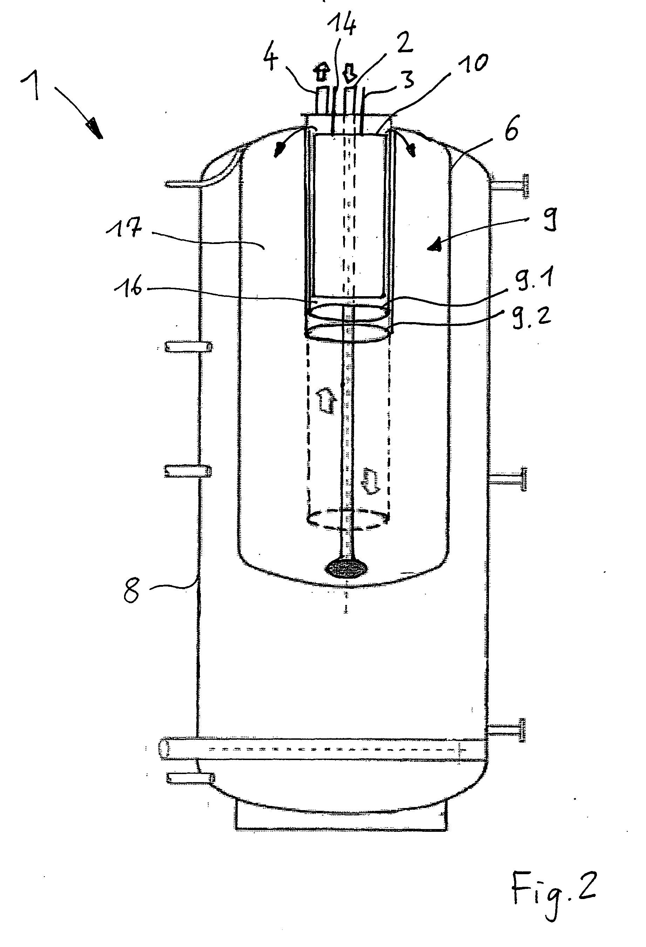

In der Figur 2 ist ein Wärmeüberträger 1 mit einem zylinderförmigen Kamin 9 in einem Boiler 6 dargestellt. Der Boiler 6 wird wiederum von einem Außenboiler 8 umschlossen. Abweichend zu der Figur 1 ist kein Kondensator im Außenboiler 8 vorgesehen.

Die Rohrleitung 10 für das Wärmeträgermedium ist nur schematisch dargestellt. Die Rohrleitung 10 kann beispielsweise in Form einer U-förmigen Rohrschleife oder gegebenenfalls wendelförmig vorgesehen sein. Bei der gezeigten Ausführungsform sind sowohl der Wärmeträgermediumeinlass 3 als auch der Wärmeträgermediumauslass 14 im oberen Bereich des Boilers 6, hier angeschlossen an dessen Oberseite, vorgesehen.

Auch die Nutzflüssigkeit, insbesondere Frischwasser, wird von oben in den Boiler 6 eingeleitet und oben aus dem Boiler 6 ausgeleitet, siehe den Einlass 2 und den Auslass 4, welche jeweils senkrecht von oben, entsprechend den Wärmeträgermediumanschlüssen im Boiler 6 münden.

Der Kamin 9 ist mehrteilig ausgebildet, vorliegend bestehend aus den Teilen 9.1 und 9.2. Weitere Teile könnten vorgesehen sein. Die Teile 9.1 und 9.2 sind jeweils zylinderförmig und gleiten teleskopartig ineinander. Der erste Teil 9.1 ist feststehend, wohingegen der zweite Teil 9.2 vertikal verschiebbar, hier außen gleitend auf dem ersten Teil 9.1, ist.

Wenn der zweite Teil 9.2 sich in seiner obersten Position befindet, ist er deckungsgleich mit dem ersten Teil 9.1 oder ragt nur etwas unten über den ersten Teil 9.1 heraus. Wenn der zweite Teil 9.2 sich in seiner untersten Position befindet, verlängert er die vertikale Ausdehnung des Kamins 9 auf die Summe der vertikalen Längen der beiden Teile 9.1 und 9.2. Die vertikale Länge des Kamins 9 bestimmt den Anteil von Nutzflüssigkeit in dem Boiler 6, welcher aufgrund des Kamineffekts des Kamins 9 umgewälzt wird. Wenn beispielsweise der Kamin 9 seine kürzeste Erstreckung aufweist, das heißt der zweite Teil 9.2 ist vollständig oder nahezu vollständig auf den ersten Teil 9.1 aufgeschoben, wird, in Abhängigkeit der konstruktiven Länge des Kamins 9, beispielsweise die Hälfte oder 40 bis 50 % der im Boiler 6 befindlichen Nutzflüssigkeit umgewälzt, nämlich nur deren oberer Anteil. Wenn hingegen der Kamin 9 auf seine volle Länge ausgefahren ist, wird nahezu die gesamte Menge von Nutzflüssigkeit oder sämtliche Nutzflüssigkeit im Boiler 6 durch den Kamineffekt umgewälzt.

Der höhenverstellbare zweite Teil 9.2 des Kamins 9 kann beispielsweise mit einer solchen Dichte versehen sein, beispielsweise mit der Dichte von Wasser bei 40°, dass er unterhalb eines vorgegebenen Temperaturniveaus der Nutzflüssigkeit im Boiler 6 nach oben aufsteigt (beispielsweise bei weniger als 40°) und somit den Anteil der durch den Kamineffekt umgewälzten Flüssigkeitsmenge verringert, was zu einem schnelleren Erhitzen der Nutzflüssigkeit im oberen Bereich des Boilers 6 durch die vom Wärmeträgermedium eingebrachte Wärme führt. Mit zunehmendem Temperaturniveau der Nutzflüssigkeit im Boiler 6 sinkt der zweite Teil 9.2 des Kamins 9 nach unten ab, so dass zunehmend auch die unteren Schichten der Nutzflüssigkeit im Boiler 6 durch den Kamin 9 und aus diesem wieder heraus zirkulieren. Eventuell vorhandene Legionellen werden somit zuverlässig abgetötet.

Bei der in der Figur 2 gezeigten Ausführung mündet die Leitung zum Einleiten der Nutzflüssigkeit wiederum im unteren Bereich des Boilers 6. Dies ist, entsprechend der Figur 1, vorteilhaft, jedoch nicht zwingend notwendig.

Die Rohrleitung 10, ungeachtet ihrer Form, erstreckt sich vorliegend nur in jenem vertikalen Bereich, der von dem ersten Teil 9.1 des Kamins 9 eingeschlossen wird. Selbstverständlich ist es möglich, die Rohrleitung 10 in Vertikalrichtung kürzer oder länger auszuführen, so dass sie sich beispielsweise nur in einem Teilbereich des ersten Teils 9.1 oder nach unten aus dem ersten Teil 9.1 heraus erstreckt.

Als besondere Vorteile des erfindungsgemäßen Wärmeüberträgers ist die wirtschaftlich abgestimmte Kombination der Frischwassererwärmung über den vorgeschalteten Enthitzer (Rohrleitung 10), der eine Frischwassererwärmung über das Niveau der Kondensationstemperatur ermöglicht, und des zwangsgeführten Umlaufes des Frischwassers 5 im Boiler 6 aus dem äußeren Volumen 17 in das innere Volumen 16 und zurück zu nennen, so dass beispielsweise Legionellen im Frischwasser 5 zuverlässig vernichtet werden.

Wenn der Wärmeüberträger in einem Wärmepumpenkreislauf beispielsweise im Wohnhausbereich vorgesehen wird, vernichtet er gesundheitsgefährdende Stoffe wie Legionellen ohne die Notwendigkeit elektrischer Zusatzenergie und ohne Verschlechterung der Arbeitszahl. Der Wärmeüberträger findet vornehmlich im Wohnhausbereich Verwendung und erfüllt die in der DIN 4708 gestellten Anforderungen.

## Patentansprüche

1. Wärmeüberträger (1) zur Erwärmung einer Nutzflüssigkeit, insbesondere von Frischwasser (5);
1.1 mit einem Einlass (2) zum Einleiten der Nutzflüssigkeit in den Wärmeüberträger (1);
1.2 mit einem Auslass (4) zum Ableiten der Nutzflüssigkeit aus dem Wärmeüberträger (1);
1.3 mit einem Wärmeträgermediumeinlass (3) zum Einleiten eines erhitzten Wärmeträgermediums in den Wärmeüberträger (1);
1.4 mit einem Wärmeträgermediumauslass (14) zum Ableiten des Wärmeträgermediums aus dem Wärmeüberträger (1);
1.5 mit einer Wärmeaustauschfläche, entlang von welcher die Nutzflüssigkeit und das Wärmeträgermedium geführt sind, um Wärme vom Wärmeträgermedium auf die Nutzflüssigkeit zu übertragen; **gekennzeichnet durch** die folgenden Merkmale:
1.6 der Wärmeüberträger (1) weist einen Boiler (6) zur Aufnahme eines Volumens von Nutzflüssigkeit auf, in welchem der Einlass (2) und der Auslass (4) für die Nutzflüssigkeit münden; und
1.7 **durch** welchen eine das Wärmeträgermedium führende Rohrleitung (10) geführt ist;
1.8 im Boiler (6) ist ein Kamin (9) ausgebildet, welcher die Rohrleitung (10) in Umfangsrichtung umschließt und **dadurch** ein inneres Volumen (16) des Boilers (6) von einem äußeren Volumen (17) des Boilers (6) bei Belassen einer Eintrittfläche für Nutzflüssigkeit von dem äußeren Volumen (17) zu dem inneren Volumen (16) in einem unteren Bereich des Kamins (9) und einer Austrittsfläche für Nutzflüssigkeit von dem inneren Volumen (16) zu dem äußeren Volumen (17) in einem oberen Bereich des Kamins (9) abtrennt.

2. Wärmeüberträger (1) gemäß Anspruch 1, **dadurch gekennzeichnet, dass** sich der Kamin (9) von unten nach oben verjüngt.

3. Wärmeüberträger (1) gemäß einem der Ansprüche 1 oder 2, **dadurch gekennzeichnet, dass** der Einlass (2) für die Nutzflüssigkeit in einem unteren Bereich des Kamins (9), insbesondere in der Nähe oder an der Eintrittsfläche im Boiler (6), mündet.

4. Wärmeüberträger (1) gemäß einem der Ansprüche 1 bis 3, **dadurch gekennzeichnet, dass** der Auslass (4) für die Nutzflüssigkeit in einem oberen Bereich des Boilers (6), insbesondere von oben in einer oberen Stirnseite des Boilers (6), mündet.

5. Wärmeüberträger (1) gemäß einem der Ansprüche 1 bis 4, **dadurch gekennzeichnet, dass** die Rohrleitung (10) von oben nach unten durch den Boiler (6) geführt ist und einen ersten senkrechten, linearen Abschnitt aufweist, an welchen sich unterhalb ein wendelförmiger Abschnitt, insbesondere mit einem zunehmenden Durchmesser der Wendeln in Richtung nach unten, anschließt, und der Kamin (9) die Rohrleitung (10) insbesondere mit im wesentlichen konstantem Abstand in Breitenrichtung des Boilers (6) umschließt.

6. Wärmeüberträger (1) gemäß einem der Ansprüche 1 bis 5, **dadurch gekennzeichnet, dass** die Rohrleitung (10) als Enthitzer für überhitztes Wärmeträgermedium, insbesondere Kältemitteldampf, ausgeführt ist, und sich an die Rohrleitung (10) ein Kondensator (11), insbesondere in Form einer weiteren Rohrwendel, anschließt, der insbesondere im Wärmeträgermediumauslass (14) endet.

7. Wärmeüberträger (1) gemäß einem der Ansprüche 1 bis 6, **dadurch gekennzeichnet, dass** der Boiler (6) zylinderförmig ist.

8. Wärmeüberträger (1) gemäß einem der Ansprüche 1 bis 7, **dadurch gekennzeichnet, dass** der Boiler (6) von einem Außenboiler (8) umgeben wird, und in den Zwischenraum zwischen Boiler (6) und Außenboiler (8) ein zweites Wärmeträgermedium (7), insbesondere Wasser, eingebracht ist, und der Außenboiler (8) insbesondere mit einer Wärmeisolierung (12) gegenüber der Umgebung thermisch isoliert ist.

9. Wärmeüberträger (1) gemäß Anspruch 8, **dadurch gekennzeichnet, dass** der Außenboiler (8) einen Außenboilereinlass (13) und einen Außenboilerauslass (15) zum Zuführen und Ableiten des zweiten Wärmeträgermediums (7) umfasst.

10. Wärmeüberträger (1) gemäß Anspruch 6 und einem der Ansprüche 8 oder 9, **dadurch gekennzeichnet, dass** der Kondensator (11) im Zwischenraum zwischen Boiler (6) und Außenboiler (8), insbesondere unterhalb des Boilers (6), angeordnet ist, und dass insbesondere im Zwischenraum zwischen Boiler (6) und Außenboiler (8) eine oder mehrere weitere Wärmetauscher mit entsprechenden Einlässen und Auslässen vorgesehen sind.

11. Wärmeüberträger (1) gemäß einem der Ansprüche 1 bis 10, **dadurch gekennzeichnet, dass** die Eintrittsfläche und/oder die Austrittsfläche für Nutzflüssigkeit höhenverstellbar ist, insbesondere durch eine Höhenverstellbarkeit des Kamins (9).

12. Wärmeüberträger (1) gemäß Anspruch 11, **dadurch gekennzeichnet, dass** der Kamin (9) einen ersten feststehenden Teil (9.1) und einen zweiten höhenverstellbaren Teil (9.2) aufweist, wobei der zweite Teil (9.2) teleskopartig in dem oder auf dem ersten Teil (9.1) gleitet.

13. Wärmeüberträger (1) gemäß einem der Ansprüche 11 oder 12, **dadurch gekennzeichnet, dass** der höhenverstellbare Kamin (9) oder der höhenverstellbare zweite Teil (9.2) des Kamins (9) in vertikaler Richtung frei schwimmend in der Nutzflüssigkeit im Boiler (6) angeordnet ist.
